# EUROPEAN PATENT APPLICATION

(11) **EP 4 711 690 A1**
(43) Date of publication of application: **18.03.2026**
(21) Application number: 24830267.1
(22) Date of filing: 17.05.2024
(51) Int. Cl.: F25B 30/06

(54) **HYDRAULIC MODULE UNIT AND HEAT PUMP SYSTEM**

(30) Priority: 30.06.2023 CN 202321715726 U
(71) Applicant: GD Midea Heating & Ventilating Equipment Co., Ltd., Foshan, Guangdong 528311 (CN); Hefei Midea Heating & Ventilating Equipment Co., Ltd., Hefei, Anhui 230088 (CN)
(72) Inventor: ZHAN, Linmin, Foshan, Guangdong 528311 (CN); LI, Yang, Foshan, Guangdong 528311 (CN); LI, Hongwei, Foshan, Guangdong 528311 (CN); LI, Haobiao, Foshan, Guangdong 528311 (CN); YANG, Yongliang, Foshan, Guangdong 528311 (CN)
(74) Representative: Ran, Handong
(86) International application number: PCT/CN2024/094002
(87) International publication number: WO 2025/001619

(57) **Abstract**

A hydraulic module unit and a heat pump system. The hydraulic module unit comprises a housing (10), a hydraulic module (20), a connecting pipe (30) and a pipe joint (40), wherein the housing (10) has an accommodating cavity (14) and a mounting through hole (11), which is in communication with the accommodating cavity (14); the hydraulic module (20) is arranged in the accommodating cavity (14); the connecting pipe (30) is arranged in the accommodating cavity (14) and is in communication with the hydraulic module (20); and the pipe joint (40) is connected to the housing (10), is in communication with the connecting pipe (30) via the mounting through hole (11), and is configured to be butt-joined to a pipeline of an external terminal. Thus, the deformation of the connecting pipe (30) caused by an external force transmitted from the pipe joint (40) can be reduced.

## Description

### CROSS-REFERENCE TO RELATED APPLICATION

The present application claims priority to Chinese Patent Application No.202321715726.4, titled "HYDRAULIC MODULE UNIT AND HEAT PUMP SYSTEM" and filed with the China National Intellectual Property Administration on June 30, 2023, the entire contents of which are incorporated herein by reference.

### TECHNICAL FIELD

The present application relates to the technical field of heat pump systems, and particularly to a hydraulic module unit and a heat pump system.

### BACKGROUND

In a heat pump system, a hydraulic module unit is docked to a terminal end of the heat pump system for heat supply. Wherein the terminal end of the heat pump system may be a floor heating coil or a user's domestic water pipe, etc. Therefore, a pipeline of the terminal end communicates with an internal pipeline in the hydraulic module unit through a pipe coupler between the terminal end of the heat pump system and the hydraulic module unit. In related technology, a connecting pipe in the hydraulic module of the hydraulic module unit is directly connected to the external pipeline of the terminal end, and the pipe coupler allows an external force to be mutually transmitted between the connecting pipe and the external pipeline, which may cause deformation in one or both of the connecting pipe and the external pipeline.

### SUMMARY

Embodiments of the present application provide a hydraulic module unit and a heat pump system, which can reduce deformation of a connecting pipe due to an external force transmitted via a pipe coupler.

In a first aspect, embodiments of the present application provide a hydraulic module unit. The hydraulic module unit includes a housing, a hydraulic module, a connecting pipe and a pipe coupler. The housing includes an accommodating cavity and an installation through hole communicating with the accommodating cavity. The hydraulic module is provided in the accommodating cavity. The connecting pipe is provided in the accommodating cavity, and communicates with the hydraulic module. The pipe coupler is connected to the housing, and communicates with the connecting pipe via the installation through hole, for docking to a pipeline of an external terminal.

In the hydraulic module unit according to the embodiments of the present application, the pipe coupler is used to dock to the pipeline of the external terminal, that is, the pipe coupler is connected to the pipeline of the external terminal, to enable communication between the hydraulic module unit and the external terminal. Since the pipe coupler in the present application is connected to the housing, after the pipe coupler is connected to the pipeline of the external terminal, an external force applied by the pipeline of the external terminal to the pipe coupler is at least partially transmitted to the housing, such that the deformation of the connecting pipe due to the external force transmitted from the pipeline of the external terminal is reduced.

In some embodiments of the present application, the pipe coupler includes a pipe body and a housing connecting portion. The pipe body communicates with the connecting pipe and is partially located outside the housing for docking to the pipeline of the external terminal. The housing connecting portion is fixedly connected to the pipe body and is detachably fixedly connected to the housing.

According to the above embodiments, the housing connecting portion is connected to the housing to realize the connection between the pipe coupler and the housing. The pipeline is at least partially located outside the housing to dock to the pipeline of the external terminal, thereby enabling connection between the pipe coupler and the pipeline of the external terminal.

In some embodiments of the present application, the housing is provided with fixing holes. The housing connecting portion is provided with connecting holes. The hydraulic module unit further comprises connecting members. The housing connecting portion is detachably fixedly connected to the housing through the cooperation of the connecting members with the connecting holes and the fixing holes.

According to the above embodiments, the housing connecting portion is detachably fixedly connected to the housing through the cooperation of the connecting members with the connecting holes and the fixing holes.

In some embodiments of the present application, a positioning groove is formed on an outer wall surface of the housing. The housing connecting portion is at least partially positioned in the positioning groove, and the fixing holes are formed in a bottom wall of the positioning groove.

According to the above embodiments, the housing connecting portion is at least partially disposed in the positioning groove, in order to facilitate the alignment of the fixing holes and the connecting holes, thereby facilitating the assembly between the housing connecting portion and the housing.

In some embodiments of the present application, one end of the connecting pipe facing the pipe coupler is formed with a first coupling portion. One end of the pipe body facing the connecting pipe is formed with a second coupling portion. A partial structure of one of the first coupling portion and the second coupling portion is inserted through the installation through hole to be nested with the other one of the first and second coupling portions, and a sealing ring is clamped between the first coupling portion and the second coupling portion.

According to the above embodiments, after the first coupling portion and the second coupling portion are nested, the pipe coupler communicates with the connecting pipe. Meanwhile, the first coupling portion and the second coupling portion are nested, the first coupling portion and the second coupling portion can be assembled and disassembled by plugging and unplugging, that is, the first coupling portion and the second coupling portion can be easily assembled and disassembled. A sealing ring is clamped between the first coupling portion and the second coupling portion, ensuring sealing performance between the first coupling portion and the second coupling portion.

In some embodiments of the present application, an annular mounting groove is formed in at least one of the first coupling portion and the second coupling portion. The sealing ring is seated in the annular mounting groove.

According to the above embodiments, after the first coupling portion is inserted into or sleeved onto the second coupling portion, the sealing ring abuts against a bottom wall of the annular mounting groove and an inner wall of the first coupling portion or the second coupling portion, in order to seal the first and second coupling portions.

In some embodiments of the present application, the connecting pipe further includes a mounting portion fixedly connected to the first coupling portion. The mounting portion is fixedly connected to the housing.

According to the above embodiments, firstly, the connecting pipe is fixed by means of a connection to the housing through the mounting portion, which further reduces deformation of the connecting pipe due to an external force transmitted from the pipeline of the external terminal. Additionally, an external force applied by the connecting pipe to the pipe coupler is partially transmitted to the housing, thereby enabling better engagement between the first coupling portion and the second coupling portion.

In some embodiments of the present application, the mounting portion is provided with mounting holes corresponding to and communicating with the fixing holes. The mounting portion and the housing connecting portion are fixed through cooperation of the connecting members with the mounting holes, the connecting holes and the fixing holes.

According to the above embodiments, through the cooperation of the connecting members, connected to the housing connecting portion and the housing, with the mounting holes, thereby enabling a fixed connection between the mounting portion and the housing, and simplifying the connecting structure between the mounting portion and the housing.

In some embodiments of the present application, one end of the connecting pipe facing the pipe coupler is formed with a first coupling portion. One end of the pipe body facing the connecting pipe is formed with a second coupling portion. The first coupling portion and the second coupling portion are respectively docked to and communicate with the installation through hole.

According to the above embodiments, after the first coupling portion and the second coupling portion are respectively docked to and communicate with the installation through hole, the first coupling portion communicates with the second coupling portion through the installation through hole. That is, the first coupling portion does not need to be connected to the second coupling portion, the pipeline of the external terminal applies an external force to only the housing and the pipe coupler, and the connecting pipe applies an external force to only the housing. The pipeline of the external terminal and the connecting pipe will not affect each other.

In a second aspect, embodiments of the present application provide a heat pump system. The heat pump system includes the hydraulic module unit as described above.

In the heat pump system according to the embodiments of the present application, due to the provision of the hydraulic module unit, the interaction forces between the connecting pipe of the heat pump system and the pipeline of the external terminal can be reduced, thereby enhancing the reliability of the heat pump system.

In the hydraulic module unit according to the embodiments of the present application, the pipe coupler is used to dock to the pipeline of the external terminal, that is, the pipe coupler is connected to the pipeline of the external terminal, to enable communication between the hydraulic module unit and the external terminal. Since the pipe coupler in the present application is connected to the housing, after the pipe coupler is connected to the pipeline of the external terminal, an external force applied by the pipeline of the external terminal to the pipe coupler is at least partially transmitted to the housing, such that the deformation of the connecting pipe due to the external force transmitted via the pipe coupler is reduced.

### BRIEF DESCRIPTION OF THE DRAWINGS

To describe the technical solutions of the embodiments of the present application or those of the prior art more clearly, the accompanying drawings required for describing the embodiments or the prior art will be briefly introduced below. Apparently, the accompanying drawings in the following description are merely some embodiments of the present application. To those of ordinary skills in the art, other accompanying drawings may also be derived from these accompanying drawings without creative efforts.
FIG. 1 is a schematic structural diagram of a hydraulic module unit according to an embodiment of the present application with one side wall of a housing removed.
FIG. 2 is a schematic structural diagram of a housing, a pipe coupler, and a connecting pipe in a connected state according to an embodiment of the present application.
FIG. 3 is an exploded schematic structural diagram of the housing, the pipe coupler, and the connecting pipe shown in FIG. 2.
FIG. 4 is a schematic structural diagram of a housing, a pipe coupler, and a connecting pipe in a connected state according to another embodiment of the present application.
FIG. 5 is a schematic structural diagram of a housing, a pipe coupler, and a connecting pipe in a connected state according to still another embodiment of the present application.

Reference numerals in the accompanying drawings: housing 10; installation through hole 11; fixing hole 12; positioning groove 13; accommodating cavity 14; hydraulic module 20; connecting pipe 30; first coupling portion 31; mounting portion 32; mounting hole 321; pipe coupler 40; pipe body 41; second coupling portion 411; annular mounting groove 412; housing connecting portion 42; connecting hole 421; connecting member 50; sealing ring 60.

### DETAILED DESCRIPTION

Detailed description of the present application will further be made with reference to the accompanying drawings and embodiments to make the objectives, technical solutions and advantages of the present application more apparent. It should be understood that the embodiments described herein are merely used to explain the present application, and are not intended to limit the present application.

In a heat pump system, a hydraulic module unit is docked to a terminal end of the heat pump system for heat supply. Wherein, the terminal end of the heat pump system may be a floor heating coil or a user's domestic water pipe, etc. Therefore, a pipeline of the terminal end communicates with an internal pipeline in the hydraulic module unit through a pipe coupler between the terminal end of the heat pump system and the hydraulic module unit. In related technology, a connecting pipe in the hydraulic module of the hydraulic module unit is directly connected to the external pipeline of the terminal end, and the pipe coupler allows an external force to be mutually transmitted between the connecting pipe and the external pipeline, which may cause deformation in one or both of the connecting pipe and the external pipeline.

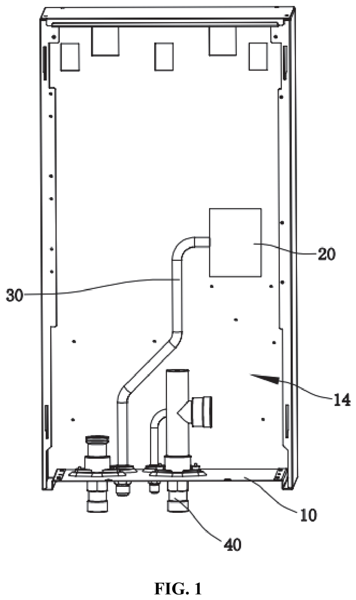

To solve the above technical problem, referring to FIGS. 1 to 2, a first aspect of the present application provides a hydraulic module unit which can reduce deformation of the connecting pipe 30 caused by the pipeline of the external terminal.

The hydraulic module unit includes a housing 10, a hydraulic module 20, a connecting pipe 30 and a pipe coupler 40. The housing 10 is provided with an accommodating cavity 14 and an installation through hole 11 communicating with the accommodating cavity 14. The hydraulic module 20 is provided in the accommodating cavity 14. The connecting pipe 30 is provided in the accommodating cavity 14, and communicates with the hydraulic module 20. The pipe coupler 40 is connected to the housing 10, and communicates with the connecting pipe 30 via the installation through hole 11, for docking to the pipeline of the external terminal.

The housing 10 serves as a casing for the hydraulic module unit. The size, shape, and material of the housing 10 are not limited in the embodiments of the present application. However, it should be ensured that the housing 10 has good load-bearing performance, to better withstand an external force transmitted via the pipe coupler 40 to the housing 10. Meanwhile, the material of the housing 10 may be selected from aluminum alloy, steel or the like with relatively high hardness. As for the shape of the housing 10, in some embodiments of the present application, the housing 10 is configured in a rectangular structure.

The accommodating cavity 14 is used for accommodating the hydraulic module 20 and the connecting pipe 30. It should be understood that the accommodating cavity 14 may be configured in any shape and size, as long as it is capable of accommodating the hydraulic module 20 and the connecting pipe 30.

The hydraulic module 20 can automatically adjust the operating frequency of the heat pump system based on the demand of the terminal. In some embodiments of the present application, the hydraulic module 20 includes a heat exchanger, an expansion vessel, and a water pump, which sequentially communicate with each other.

The connecting pipe 30 is configured to enable communication between the hydraulic module 20 and the pipe coupler 40. In conjunction with the hydraulic module 20 including the heat exchanger, the expansion tank, and the water pump and the like as described above, the connecting pipe 30 in the embodiments of the present application can be used to enable communication between the heat exchanger, the expansion vessel or the water pump, and the pipe coupler 40. The length, material, shape, and diameter of the connecting pipe 30 are not limited in the embodiments of the present application.

In the hydraulic module unit according to the embodiments of the present application, the pipe coupler 40 is used to dock to the pipeline of the external terminal. That is, the pipe coupler 40 is connected to the pipeline of the external terminal, to enable communication between the hydraulic module unit and the external terminal. Since the pipe coupler 40 in the present application is connected to the housing 10, after the pipe coupler 40 is connected to the pipeline of the external terminal, an external force applied by the pipeline of the external terminal to the pipe coupler 40 is at least partially transmitted to the housing 10, such that the deformation of the connecting pipe 30 due to the external force transmitted via the pipe coupler 40 is reduced.

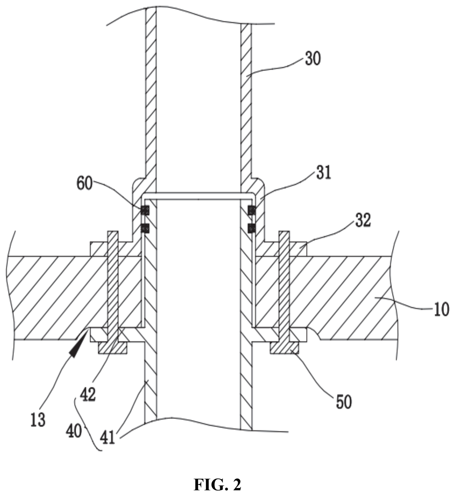

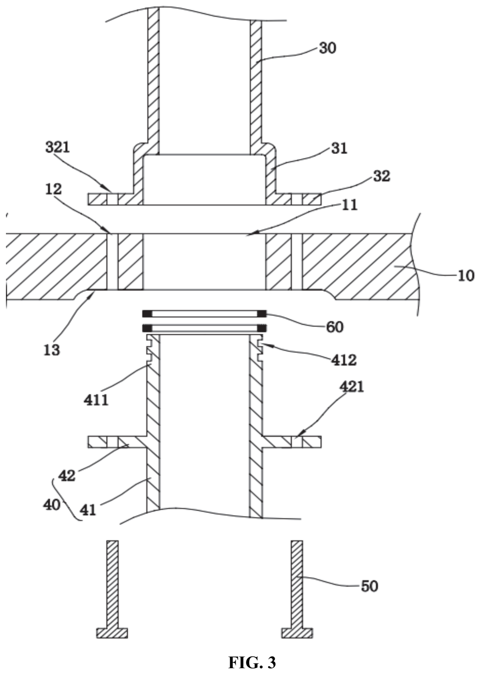

Referring to FIGS. 2 to 3, in some embodiments of the present application, the pipe coupler 40 includes a pipe body 41 and a housing connecting portion 42. The pipe body 41 is docked to and communicates with the connecting pipe 30, and is partially located outside the housing 10 for docking to the pipeline of the external terminal. The housing connecting portion 42 is fixedly connected to the pipe body 41 and detachably fixedly connected to the housing 10. Thus, the housing connecting portion 42 is connected to the housing 10 to realize the connection between the pipe coupler 40 and the housing 10. The pipeline is at least partially located outside the housing 10 to dock to the pipeline of the external terminal, thereby achieving connection between the pipe coupler 40 and the pipeline of the external terminal.

The housing connecting portion 42 is configured to connect to the housing 10. In some embodiments of the present application, the number of the housing connecting portions 42 is two, and the two housing connecting portions 42 are symmetrically arranged about the axis of the pipe body 41. It can be understood that the number of the housing connecting portions 42 may be set arbitrarily. For example, the larger the outer diameter of the pipe body 41 is, the greater the number of the housing connecting portions 42 may be, in order to ensure the connection strength between the pipe coupler 40 and the housing 10.

Referring to FIGS. 2 to 3, in some embodiments of the present application, the housing 10 is provided with fixing holes 12. The housing connecting portion 42 is provided with connecting holes 421. The hydraulic module unit further comprises connecting members 50, the housing connecting portion 42 is detachably fixedly connected to the housing 10 through the cooperation of the connecting members 50 with the connecting holes 421 and the fixing holes 12. In this way, the housing connecting portion 42 and the housing 10 are detachably fixedly connected through the connecting members 50, the connecting holes 421, and the fixing holes 12.

In some embodiments of the present application, the connecting members 50 are configured as studs. Hole walls of the fixing holes 12 corresponding to the studs are provided with internal threads. Each stud passes through a connecting hole 421 and then is threadedly connected to the hole wall of a fixing hole 12. The head of the stud abuts against the housing connecting portion 42, to connect the housing connecting portion 42 to the housing 10. It can be understood that the housing connecting portion 42 and the housing 10 may also be fixedly connected by other means, such as welding, riveting, or snap-fitting.

Referring to FIGS. 2 to 3, in some embodiments of the present application, a positioning groove 13 is formed on an outer wall surface of the housing 10, the housing connecting portion 42 is at least partially positioned in the positioning groove 13, and the fixing holes 12 are formed in a bottom wall of the positioning groove 13. In this way, the housing connecting portion 42 is at least partially disposed in the positioning groove 13, to facilitate the alignment of the fixing holes 12 and the connecting holes 421, and the positioning groove 13 may serve as a concave reinforcing rib to enhance the structural strength of the housing 10, thereby improving the load-bearing capacity of the housing 10. In some embodiments of the present application, the positioning groove 13 is shaped and positioned on the housing 10 to be adapted to the housing connecting portion 42.

Referring to FIGS. 2 to 3, in some embodiments of the present application, one end of the connecting pipe 30 facing the pipe coupler 40 is formed with a first coupling portion 31. One end of the pipe body 41 facing the connecting pipe 30 is formed with a second coupling portion 411. A partial structure of one of the first coupling portion 31 and the second coupling portion 411 is inserted through the installation through hole 11 to be nested with the other one of the first and second coupling portions, and a sealing ring 60 is clamped between the first coupling portion 31 and the second coupling portion 411. Accordingly, after the first coupling portion 31 and the second coupling portion 411 are nested, the pipe coupler 40 communicates with the connecting pipe 30, and the sealing ring 60 is clamped between the first coupling portion 31 and the second coupling portion 411, ensuring sealing performance between the first coupling portion 31 and the second coupling portion 411.

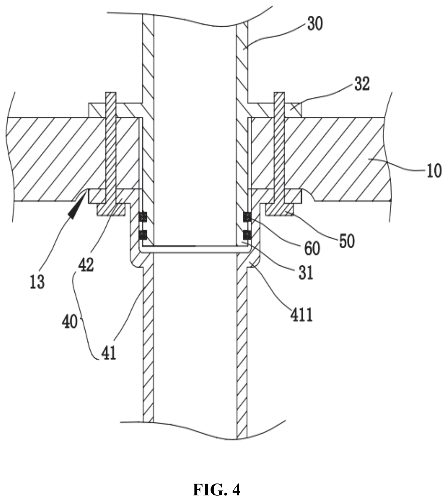

It can be understood that a partial structure of one of the first coupling portion 31 and the second coupling portion 411 is inserted through the installation through hole 11 to be nested with the other one of the first and second coupling portions, which includes the following cases: (1) the first coupling portion 31 passes through the installation through hole 11 and is inserted into the second coupling portion 411 (see FIG. 4); (2) the first coupling portion 31 passes through the installation through hole 11 and is sleeved onto the second coupling portion 411; (3) the second coupling portion 411 passes through the installation through hole 11 and is inserted into the first coupling portion 31;(4) the second coupling portion 411 passes through the installation through hole 11 and is sleeved onto the first coupling portion 31; (5) the first coupling portion 31 is inserted into the second coupling portion 411 in the installation through hole 11 (the second coupling portion 411 is also in the installation through hole 11); (6) the first coupling portion 31 is sleeved onto the second coupling portion 411 in the installation through hole 11 (the second coupling portion 411 is also in the installation through hole 11). When the first coupling portion 31 passes through the installation through hole 11 and is sleeved onto the second coupling portion 411, the housing connecting portion 42 includes a first connecting sub-portion, a second connecting sub-portion, and a third connecting sub-portion connected in sequence. The first connecting sub-portion and the third connecting sub-portion are arranged in a radial direction of the second coupling portion 411. The second connecting sub-portion is arranged along an axis of the second coupling portion 411, and the third connecting sub-portion abuts against the bottom wall of the positioning groove 13. Meanwhile, the positioning groove 13 is shaped and positioned on the housing 10 to be adapted to the third connecting sub-portion.

In some embodiments of the present application, both the first coupling portion 31 and the second coupling portion 411 are configured as tubular structures. That is, the first coupling portion 31 has a first flow channel arranged along its own axial direction, and the second coupling portion 411 has a second flow channel arranged along its own axial direction. It can be understood that when the first coupling portion 31 is inserted into the second coupling portion 411, the shape of the first coupling portion 31 conforms to the shape of the second flow channel. Moreover, when the first coupling portion 31 is inserted into the second coupling portion 411, the first coupling portion 31 abuts against an inner wall of the second flow channel. When the first coupling portion 31 is sleeved onto the second coupling portion 411, the shape of the second coupling portion 411 conforms to that of the first flow channel. Moreover, when the first coupling portion 31 is sleeved onto the second coupling portion 411, the second coupling portion 411 fits against an inner wall of the first flow channel.

Referring to FIGS. 2 to 3, in some embodiments of the present application, an annular mounting groove 412 is formed in at least one of the first coupling portion 31 and the second coupling portion 411, the sealing ring 60 is seated in the annular mounting groove 412. Accordingly, after the first coupling portion 31 is inserted into or sleeved onto the second coupling portion 411, the sealing ring 60 abuts against a bottom wall of the annular mounting groove 412 and an inner wall of the first coupling portion 31 or the second coupling portion 411, to seal the first coupling portion 31 and the second coupling portion 411.

In some embodiments of the present application, part of the sealing ring 60 is disposed in the annular mounting groove 412. When one of the first coupling portion 31 and the second coupling portion 411 is sleeved onto or inserted into the other one, the sealing ring 60 is compressed to elastically deform. The elastically deformed sealing ring 60 abuts against the bottom wall of the annular mounting groove 412 and an inner wall of the first coupling portion 31 or the second coupling portion 411. It can be understood that when the first coupling portion 31 is inserted into the second coupling portion 411, the annular mounting groove 412 is arranged on the first coupling portion 31 along a circumferential direction of the first coupling portion 31. When the second coupling portion 411 is inserted into the first coupling portion 31, the annular mounting groove 412 is arranged on the second coupling portion 411 along a circumferential direction of the second coupling portion 411.

Referring to FIGS. 2 to 3, in some embodiments of the present application, the connecting pipe 30 further includes a mounting portion 32 fixedly connected to the first coupling portion 31, the mounting portion 32 is fixedly connected to the housing 10. Accordingly, the connecting pipe 30 is fixed by means of a connection to the housing 10 through the mounting portion 32, further reducing deformation of the connecting pipe 30 due to an external force transmitted from the pipeline of the external terminal. Additionally, an external force applied by the connecting pipe 30 to the pipe coupler 40 is partially transmitted to the housing 10, thereby enabling better engagement between the first coupling portion 31 and the second coupling portion 411. When the second coupling portion 411 passes through the installation through hole 11 and is sleeved onto the first coupling portion 31, the mounting portion 32 includes a fourth connecting sub-portion, a fifth connecting sub-portion, and a sixth connecting sub-portion connected in sequence. The fourth connecting sub-portion and the sixth connecting sub-portion are arranged in a radial direction of the first coupling portion 31, the fifth connecting sub-portion is arranged in the axial direction of the first coupling portion 31, and the third connecting sub-portion abuts against a wall of the accommodating cavity 14.

Referring to FIGS. 2 to 3, in some embodiments of the present application, the mounting portion 32 is provided with mounting holes 321 corresponding to and communicating with the fixing holes 12. The mounting portion 32 and the housing connecting portion 42 are fixed through cooperation of the connecting members 50 with the mounting holes 321, the connecting holes 421, and the fixing holes 12, such that the mounting portion 32, the housing connecting portion 42, and the housing 10 are fixedly connected through the connecting members 50. Specifically, each connecting member 50 passes through a connecting hole 421, a fixing hole 12, and a mounting hole 321, and is at least threadedly connected to the hole wall of a mounting hole 321.

According to the above embodiments of the present application, one end of the connecting pipe 30 facing the pipe coupler 40 is formed with the first coupling portion 31. One end of the pipe body 41 facing the connecting pipe 30 is formed with the second coupling portion 411. The first coupling portion 31 and the second coupling portion 411 are respectively docked to and communicate with the installation through hole 11. After the first coupling portion 31 and the second coupling portion 411 are respectively docked to and communicate with the installation through hole 11, the first coupling portion 31 communicates with the second coupling portion 411 through the installation through hole 11, that is, the first coupling portion 31 does not need to be further connected to the second coupling portion 411. Accordingly, the pipeline of the external terminal applies an external force to only the housing 10 and the pipe coupler 40, and the connecting pipe 30 applies an external force to only the housing 10, so that the pipeline of the external terminal and the connecting pipe 30 will not affect each other.

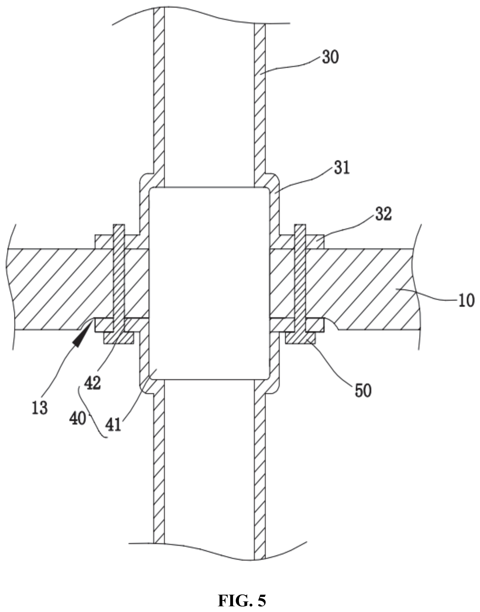

Referring to FIG. 5, in some embodiments of the present application, the first coupling portion 31 is fixedly connected to the wall of the accommodating cavity 14, the second coupling portion 411 is fixedly connected to an outer wall of the housing 10, and both the first coupling portion 31 and the second coupling portion 411 communicate with the installation through hole 11. In some embodiments of the present application, both the first coupling portion 31 and the second coupling portion 411 are fixedly connected to a hole wall of the installation through hole 11.

In a second aspect, embodiments of the present application provide a heat pump system. The heat pump system includes the hydraulic module unit as described above.

According to the heat pump system in the embodiments of the present application, due to the provision of the hydraulic module unit as described above, the interaction forces between the connecting pipe 30 of the heat pump system and the pipeline of the external terminal can be reduced, thereby enhancing the reliability of the heat pump system.

The same or similar reference numbers in the accompanying drawings of this embodiment correspond to the same or similar components. In the description of the present application, it should be understood that if there are terms such as "up", "down", "left", "right" indicating orientation or positional relationships based on the orientation or positional relationships shown in the accompanying drawings, they are only for the convenience of describing the present application and simplifying the description, and does not indicate or imply that the device or component referred to must have a specific orientation, be constructed and operated in a specific orientation. Therefore, the language used to describe the positional relationships in the accompanying drawings is only for illustrative purposes and cannot be understood as a limitation of this patent. For those of ordinary skills in the art, the specific meanings of the terms may be understood according to specific situations.

The embodiments set forth above are only illustrated as preferred embodiments of the present application, and are not intended to limit the present application. All modifications, equivalent substitutions and improvements made within the spirit and principles of the present application shall fall within the protection scope of the present application.

## Claims

1. A hydraulic module unit, comprising:
a housing having an accommodating cavity and an installation through hole communicating with the accommodating cavity;
a hydraulic module provided in the accommodating cavity;
a connecting pipe provided in the accommodating cavity and communicating with the hydraulic module; and
a pipe coupler connected to the housing and communicating with the connecting pipe via the installation through hole, for docking to a pipeline of an external terminal.

2. The hydraulic module unit according to claim 1, wherein the pipe coupler comprises:
a pipe body docked to and communicating with the connecting pipe, wherein the pipe body is partially located outside the housing for docking to the pipeline of the external terminal; and
a housing connecting portion fixedly connected to the pipe body and detachably fixedly connected to the housing.

3. The hydraulic module unit according to claim 2, wherein:
the housing is provided with fixing holes;
the housing connecting portion is provided with connecting holes; and
the hydraulic module unit further comprises connecting members,
wherein the housing connecting portion is detachably fixedly connected to the housing through cooperation of the connecting members with the connecting holes and the fixing holes.

4. The hydraulic module unit according to claim 3, wherein:
a positioning groove is formed on an outer wall surface of the housing;
the housing connecting portion is at least partially positioned in the positioning groove;
and
the fixing holes are formed in a bottom wall of the positioning groove.

5. The hydraulic module unit according to claim 3, wherein one end of the connecting pipe facing the pipe coupler is formed with a first coupling portion, and one end of the pipe body facing the connecting pipe is formed with a second coupling portion,
wherein a partial structure of one of the first coupling portion and the second coupling portion is inserted through the installation through hole to be inserted into an other one of the first coupling portion and the second coupling portion, and a sealing ring is clamped between the first coupling portion and the second coupling portion.

6. The hydraulic module unit according to claim 5, wherein an annular mounting groove is formed in at least one of the first coupling portion and the second coupling portion, and the sealing ring is seated in the annular mounting groove.

7. The hydraulic module unit according to claim 5, wherein the connecting pipe further comprises a mounting portion fixedly connected to the first coupling portion, wherein the mounting portion is fixedly connected to the housing.

8. The hydraulic module unit according to claim 7, wherein the mounting portion is provided with mounting holes corresponding to and communicating with the fixing holes, and the mounting portion and the housing connecting portion are fixed through cooperation of the connecting members with the mounting holes, the connecting holes and the fixing holes.

9. The hydraulic module unit according to claim 2, wherein one end of the connecting pipe facing the pipe coupler is formed with a first coupling portion, and one end of the pipe body facing the connecting pipe is formed with a second coupling portion, wherein the first coupling portion and the second coupling portion are respectively docked to and communicate with the installation through hole.

10. A heat pump system, comprising:
the hydraulic module unit according to any one of claims 1 to 9.
